Europäisches Patentamt

European Patent Office

Office européen des brevets

(19)

(11) Veröffentlichungsnummer: **0 062 109**
A1

(12) ## EUROPÄISCHE PATENTANMELDUNG

(21) Anmeldenummer: 81109476.2

(22) Anmeldetag: 02.11.81

(51) Int. Cl.³: **F 16 D 1/06,** F 16 D 1/02

(30) Priorität: 31.03.81 DE 3112923

(71) Anmelder: **Bayerisches Leichtmetallwerk Graf Blücher
von Wahlstatt GmbH & Co KG, Frankfurter Ring 227,
D-8000 München 40 (DE)**

(43) Veröffentlichungstag der Anmeldung: 13.10.82
Patentblatt 82/41

(72) Erfinder: **Bierwirth, Helmut, Dipl.-Ing., Dr.
Deissböckweg 1, D-8058 Erding (DE)**

(84) Benannte Vertragsstaaten: **AT BE CH DE FR GB IT LI NL
SE**

(74) Vertreter: **Siebert . Grättinger & Bockhorni,
Postfach 1649 Almeidaweg 35, D-8130 Starnberg
(München) (DE)**

(54) **Lösbare Verbindung zur Übertragung hoher Drehmomente.**

(57) Eine lösbare Verbindung zur Übertragung hoher Drehmomente, zwischen den Anschlußseiten zweier Anschlußteile, insbesondere Flansch- oder Hohlwellenverbindung an
umlaufenden Wellen, deren Anschlußteile innerhalb ihrer
Anschlußseiten miteinander verzahnt und mittels durch
Schraubenlöcher (12) beider Anschlußteile hindurchgestreckter Verbindungsschrauben (15), zusammengespannt
sind, weist eine besonders platzsparende Verzahnung der
Anschlußseiten der beiden aneinanderanliegenden Anschlußteile dadurch auf, daß im Bereich mehrerer Stützzonen (3) der Anschlußseiten eine konische Erhöhung (7)
des einen Anschlußteils in eine entsprechend konische Vertiefung (8) des anderen Anschlußteils eingreift. Bevorzugt
kommen vier Stützzonen (3) in Frage, wobei die Schraubenlöcher innerhalb der oder nahe bei den Stützzonen angebracht sind, derart, daß sich die beiden Anschlußteile gegen
den Zug der Verbindungsschrauben (15) im Bereich der
konischen Flanken der Stützzonen (3) gegeneinander abstützen.

ACTORUM AG

## Lösbare Verbindung zur Übertragung hoher Drehmomente.

Die Erfindung betrifft eine lösbare Verbindung zur Übertragung hoher Drehmomente zwischen den Anschlußseiten zweier Anschlußteile, die im Bereich schräger Stützflächen ihrer Anschlußseiten miteinander verzahnt und mittels in Schraubenlöcher (10, 11; 10a, 11a; 12) beider Anschlußteile eingebrachter Verbindungsschrauben (4; 15) zusammengespannt sind.
Eine derartige Verbindung dient ,z.B. als Flanschverbindung zweier Wellen, zur Übertragung besonders hoher Drehmomente, bevorzugt bei der Antriebsübertragung zwischen der Gelenkwelle von Kraftfahrzeugen und deren Motor, Getriebe, Wandlerachsen usw. Als Welle-Naben-Verbindung dient sie zur Übertragung des Drehmoments von einem Hohlwellengetriebe auf eine Abtriebswelle.

Insbesondere bei Lastwagen und Militärfahrzeugen sind Getriebeflansche mit bereichsweiser Kreuzverzahnung ihrer Anschlußseiten bekannt. Derartige Verzahnungen tragen aber nur zu etwa 70 % ihrer auf Abscheren beanspruchbaren Profilquerschnitte. Für die Übertragung besonders hoher Drehmomente reicht daher häufig die für die Verzahnung vorhandene Fläche der Anschlußseiten nicht aus. Der

0062109

Fachmann behilft sich in solchen Fällen mit der zusätzlichen Anbringung von Spannhülsen im Inneren der Schraubenlöcher oder von Paßstiften zusätzlich zu den Befestigungsschrauben.

Ferner sind Flanschverbindungen mit metallischer Abdichtung durch Einkeilen einer rundlaufenden Rippe mit Keilprofil an einem Flansch in eine entsprechend keilförmige Ringnut des anderen Flansches bekannt (deutsche Patentschrift 539 039). Dabei sind aus Dichtungsgründen die Löcher für die Flanschschrauben durch Rippe und Nut ohne Anschneiden der dichtenden Keilflanken hindurchgeführt. Für die Übertragung eines Drehmoments leisten Keilrippe und Keilnut hierbei keinen Beitrag.

Gegenüber dem Stand der Technik liegt der Erfindung die Aufgabe zugrunde, eine lösbare Verbindung für die Übertragung hoher Drehmomente zu schaffen, die einfach hergestellt und montiert werden kann, und die sich durch eine platzsparende Verzahnung ihrer Anschlußseiten auszeichnet, so daß, bezogen auf den Durchmesser der Anschlußteile, eine Steigerung des zu übertragenden Drehmoments gegenüber der bekannten Kreuzverzahnung möglich ist.

Erfindungsgemäß wird diese Aufgabe dadurch gelöst, daß die schrägen Stützflächen jeweils innerhalb mehrerer Stützzonen der Anschlußseiten vorgesehen sind, wobei innerhalb jeder Stützzone eine konische Erhöhung des einen Anschlußteils in eine entsprechend konische Vertiefung des anderen Anschlußteils eingreift, und daß die Schraubenlöcher innerhalb der oder nahe bei den Stützzonen angebracht sind, derart, daß sich die beiden Anschlußteile gegen den Zug der Verbindungsschrauben im Bereich der konischen Flanken der Stützzonen gegeneinander abstützen.

Die erfindungsgemäß vorgeschlagene Verbindung kommt mit verhältnismäßig wenigen Stützzonen, wenigstens zwei, bevorzugt vier, aus. Daher ist es möglich, die Erhöhungen bzw. Vertiefungen in Anpassung an das zu übertragende Drehmoment zu dimensionieren. Im Rahmen der einschlägigen DIN-Vorschriften z.B. für Flanschverbindungen ergeben sich in Anwendung des erfindungsgemäßen Vorschlags Steigerungen bei der Drehmomentübertragung um bis zu 40 %, verglichen mit der bekannten spanend bearbeiteten Kreuzverzahnung. Im Rahmen der Erfindung können die Schraubenlöcher entweder innerhalb der Stützzonen oder nahe den Stützzonen angebracht sein. Durch die radiale Abstützung der Flansche im Bereich der Stützzonen bzw. der dort vorhandenen Erhöhungen/Vertiefungen können die Schrauben frei von Scherkräften gehalten werden.

Infolge der reinen Zugbeanspruchung der Verbindungsschrauben kann man auf die Verwendung hochfester Schraubengarnituren verzichten. Zusätzlich wird durch die erfindungsgemäß vorgeschlagene formschlüssige Verbindung im Bereich konkreter Stützzonen eine hohe Sicherheit bei der Drehmomentübertragung erzielt. Gerade aufgrund der erhöhten Sicherheit dieser Verbindung ergibt sich ein besonders weites Anwendungsfeld auch außerhalb der Kraftfahrzeugindustrie, z.B. bei hochbelasteten Erdbewegungsmaschinen, Kranfahrzeugen,
aber auch bei mit hohen Sicherheitsanforderungen
verbundenen Lenkungs- und Schaltgelenken.

Besonders vorteilhaft läßt sich die erfindungsgemäße Flanschverbindung nach dem Genauschmiedeverfahren durch Warmumformen und nachfolgendes Kaltkalibrieren mit einbaufertiger Anschlußseite der
Anschlußteile (z.B. Flansche) hestellen. Der beim
Schmieden erzielte Faserverlauf begünstigt die
Festigkeit der Erhöhungen gegen Abscheren.

Die Herstellung durch Schmieden ist wesentlich billiger als die spanende Herstellung einer Verzahnung der Anschlußseiten der Anschlußteile.

Gerade die Anwendung des Schmiedeverfahrens bei der
Herstellung der Anschlußteile ermöglicht die Erzeugung beliebiger Querschnittsformen der Erhöhungen/Vertiefungen. Eine wegen ihrer, auf den Querschnitt bezogen, hohen Festigkeit bevorzugten Ausführungsform der Stützzonen besteht darin, daß die
Erhöhung kegelstumpfförmig, die Vertiefung dazu
korrespondierend, jedoch mit etwas kleinerem Bodendurchmesser als dem Kopfdurchmesser der Erhöhung
entspricht, ausgebildet ist. Die Erhöhung greift
dabei nockenartig in die Vertiefung ein, wobei sich
Erhöhung und Vertiefung unter der Wirkung des Zugs
der Befestigungsschrauben im Bereich ihrer kegeligen Flanken gegeneinander abstützen, selbstverständlich unter Aufrechterhaltung eines kleinen Abstandes zwischen Kopf der Erhöhung und dem Boden der Vertiefung. Zum Lösen der Verbindung verwendet man an sich bekannte Abdrückgewinde, in welche entsprechende Druckschrauben eingeschraubt werden.

Nach einer bevorzugten Ausführungsform der Erfindung ist vorgesehen, daß die Schraubenlöcher durch das Zentrum der Stützzonen, also mitten durch die Erhöhungen bzw. Vertiefungen gebohrt sind. Dabei erreicht man eine unmittelbare Wirkung des Schraubenzugs auf das formschlüssige Ineinandergreifen der Anschlußteile im Bereich der Stützzonen. Aber auch bei außerhalb der Stützzonen gebohrten Schraubenlöchern läßt sich eine nahezu verlustlose Übertragung des Schraubenzugs erreichen, indem nach einem weiteren Vorschlag der Erfindung die Stützzonen jeweils paarweise über die Anschlußseiten verteilt angeordnet sind und zwischen jedem Paar eine Befestigungsschraube vorgesehen ist.

Eine bevorzugte Ausführungsform der Erfindung betrifft eine Verbindung zwischen einer Welle und einer sie ummantelnden Nabe. Hier ist vorgesehen, daß ein Anschlußteil durch die Stirnseiten von Welle und Nabe, das andere Anschlußteil durch eine Kopfplatte gebildet ist, wobei die Kopfplatte mehrere konische Erhöhungen aufweist, und die entsprechend konischen Vertiefungen jeweils etwa hälftig in Welle und Nabe eingebracht sind, und daß die Kopfplatte in ihrem Zentrum mittels einer Spannschraube an der Welle befestigt ist. Dabei kann die Kopfplatte nach dem Genauschmiedeverfahren durch Warmumformen und nachfolgendes Kaltkalibrieren mit einbaufertiger Anschlußseite hergestellt sein.

-6-

0062109

Im folgenden werden Ausführungsbeispiele der Erfindung anhand der Zeichnung erläutert.
Es zeigt:

Fig. 1    eine Flanschansicht mit vier Stützzonen, in deren Zentrum jeweils eine
          Verbindungsschraube sitzt;

Fig. 2    eine Flanschansicht mit vier Stütz-
          zonen und Verbindungsschrauben außer-
          halb derselben;

Fig. 3    einen Schnitt gemäß III-III der
          Fig. 1;

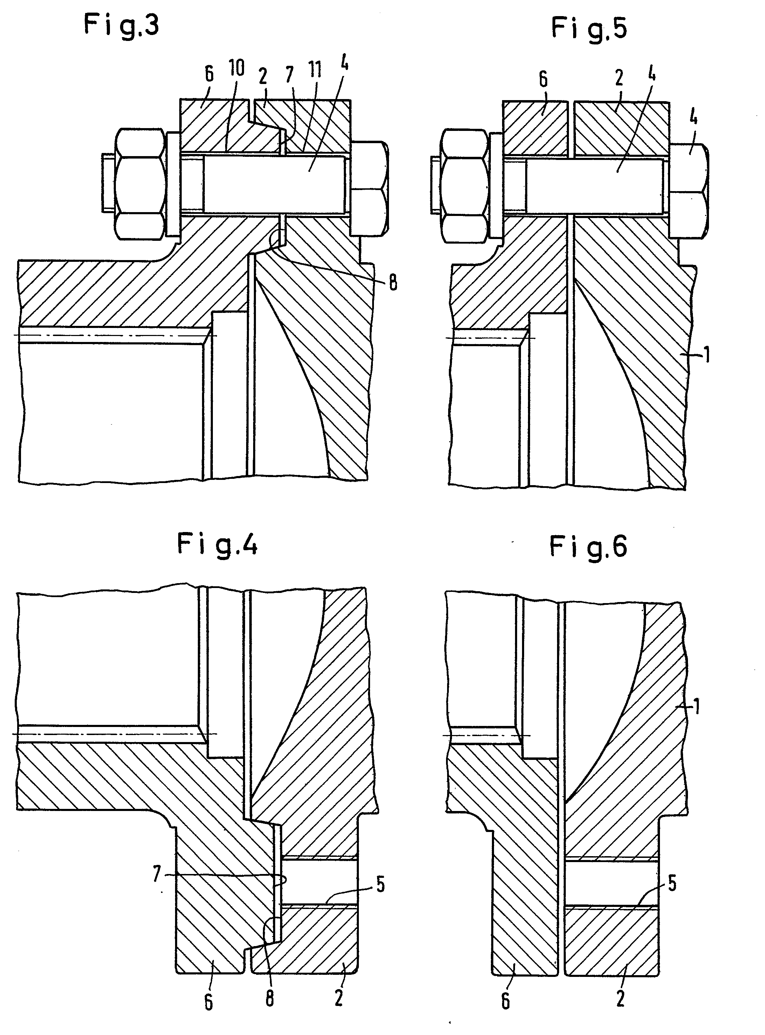

Fig. 4    einen Schnitt gemäß IV-IV der
          Fig. 2;

Fig. 5    einen Schnitt gemäß V-V der
          Fig. 2;

Fig. 6    einen Schnitt gemäß VI-VI der
          Fig. 1;

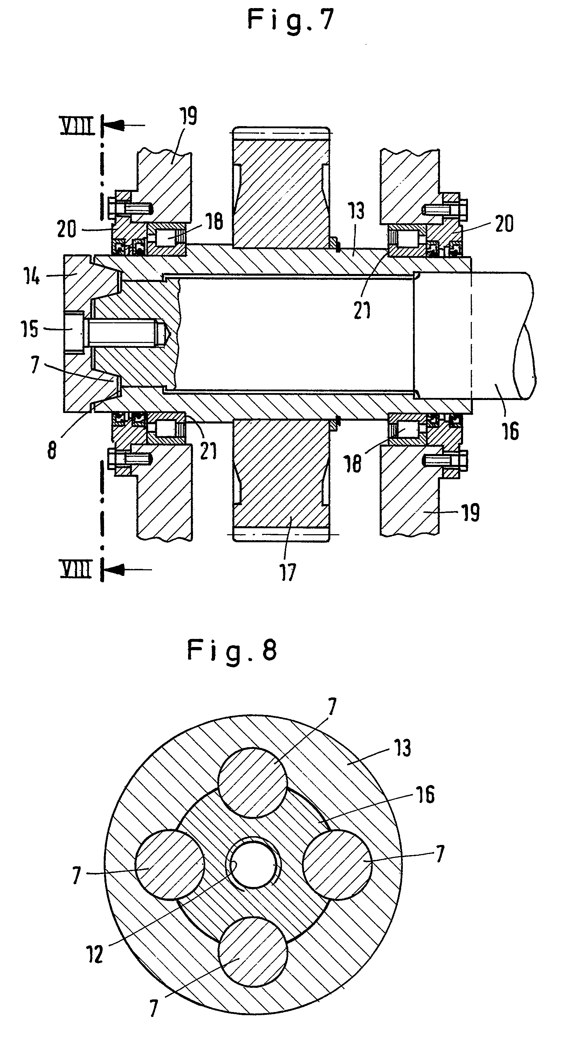

Fig. 7    einen Axialschnitt durch eine Wellen-Naben-Verbindung und

Fig. 8    einen Schnitt gemäß VIII-VIII
          der Fig. 7.

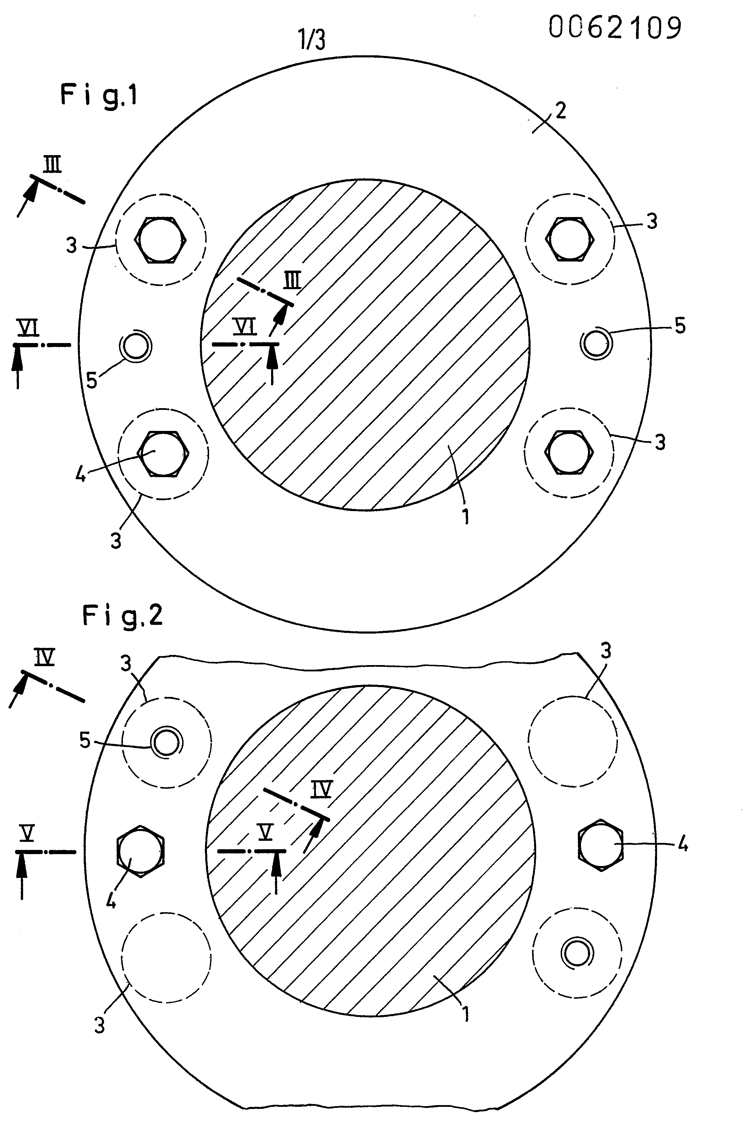

Fig. 1 zeigt einen Schnitt durch ein Wellenstück 1 mit einem Flansch 2. Im Bereich des Flansches 2 sind vier Stützzonen 3 vorgesehen, in deren Zentrum jeweils eine Verbindungsschraube 4 sitzt. Die vier Stützzonen sind paarweise gegenüberliegend angeordnet. Nach dem Lösen der Verbindungsschrauben 4 kann die Verbindung der beiden Flansche mittels der zwischen den Stützzonen vorgesehenen Abdrückgewinde 5 wieder gelöst werden. Fig. 6 zeigt einen Schnitt im Bereich eines Abdrückgewindes 5. Zum Lösen des rechten Flansches 2 vom linken Flansch 6 wird in das Abdrückgewinde 5 eine entsprechende Schraube eingedreht, bis sich die im Bereich der Stützzonen 3 formschlüssig ineinandergreifenden Flansche voneinander lösen. Ein derartiger Formschluß ist in den Fig. 3 und 4 dargestellt, wobei eine kegelförmige Erhöhung 7 in eine entsprechende Vertiefung 8 eingreift. Bei Fig. 3 ist durch das Zentrum der Stützzone eine Verbindungsschraube 4 geführt. Diese sitzt mit radialer Luft in entsprechenden Schraubenlöchern 10, 11 der beiden Flansche 2, 6. In Fig. 4 ist die Erhöhung 7 nicht durchbohrt, so daß die Scherbelastung noch erhöht werden kann. Lediglich im Bereich der Vertiefung 8 ist im Flansch 2 ein Abdrückgewinde 5 vorgesehen.

Wie in den Fig. 3 und 4 gezeigt, liegen Erhöhung 7 bzw. Vertiefung 8 im Bereich ihrer konischen Flanken fest aneinander an, d.h. die Stützzonen übernehmen allein, also ohne Mitwirkung der Verbindungsschrauben 4, die gegenseitige radiale Abstützung der beiden Flansche im Sinne des zu übertragenden Drehmoments.

Der in Fig. 5 dargestellte Schnitt zeigt eine außerhalb der Stützzone angeordnete Verbindungsschraube 4, welche durch die Schraubenlöcher 10a bzw. 11a der Flansche 6 bzw. 2 hindurchgesteckt ist.

Fig. 7 zeigt eine Wellen-Naben-Verbindung. Auf einer Nabe 13 sitzt drehfest ein Getriebeabtriebszahnrad 17, welches auf die hohle Nabe 13 treibt. Die Nabe 13 ist an beiden Enden über Wälzlager 18 gegenüber den Seitenwänden 19 des nur teilweise dargestellten Getriebegehäuses abgestützt. Lagerdeckel 20, welche an den Seitenwänden 19 des Getriebegehäuses angeschraubt sind, sichern die Wälzlager 18 gegen axiale Verschiebung, d.h. halten sie in Anlage gegen die jeweilige Wellenschulter 21. Das Getriebe mit der als Hohlwelle ausgebildeten Nabe 13 reitet somit auf einer Abtriebswelle 16 einer daran am rechten Ende angeschlossenen, nicht dargestellten getriebenen Maschine, z.B. der Trommel eines Gutförderers. Derartige Getriebe bezeichnet man auch als Hohlwellengetriebe. Im vorliegenden Fall erfolgt die Befestigung des Getriebes auf der Abtriebswelle, also die Drehmomentübertragung von der Nabe 13 auf die Abtriebswelle 16 über eine am linken Ende der Welle 16 stirnseitig teils mit der Welle 16, teils mit der Nabe 13 verzahnte Kopfplatte 14. Diese weist, wie schon oben zur Flanschverbindung erläutert, konische Erhöhungen 7 auf, die in entsprechende konische Vertiefungen 8 eingreifen, welche, wie Fig. 8 deutlich macht, gemeinsam durch Welle 16 und Nabe 13 im Bereich ihrer stirnseitigen Enden gebildet sind. Die Kopfplatte 14 ist mittels einer Spannschraube 15, welche in ein mit Gewinde versehenes Schraubenloch 12 eingeschraubt ist, axial befestigt. Die Kopfplatte 4 wird bevorzugt einbaufertig geschmiedet. Die Vertiefungen 8 in den Stirnseiten von Welle 16 und Nabe 13 werden spanend eingebracht, z.B. gebohrt. Gegenüber der bei Hohlwellengetrieben üblichen Befestigung mittels Schrumpfscheiben ist die beschriebene Verbindung mittels Kopfplatte 14 axial erheblich kürzer und weniger aufwendig.

0062109

Patentansprüche

1. Lösbare Verbindung zur Übertragung hoher Drehmomente zwischen den Anschlußseiten zweier Anschlußteile, die im Bereich schräger Stützflächen ihrer Anschlußseiten miteinander verzahnt und mittels in Schraubenlöcher (10, 11; 10a, 11a; 12) beider Anschlußteile eingebrachter Verbindungsschrauben (4; 15) zusammengespannt sind, dadurch gekennzeichnet, daß die schrägen Stützflächen jeweils innerhalb mehrerer Stützzonen der Anschlußseiten vorgesehen sind, wobei innerhalb jeder Stützzone (3) eine konische Erhöhung (7) des einen Anschlußteils in eine entsprechend konische Vertiefung (8) des anderen Anschlußteils eingreift, und daß die Schraubenlöcher (10, 11; 10a, 11a; 12) innerhalb der oder nahe bei den Stützzonen (3) angebracht sind, derart, daß sich die beiden Anschlußteile gegen den Zug der Verbindungsschrauben (4; 15) im Bereich der konischen Flanken der Stützzonen (3) gegeneinander abstützen.

2. Verbindung nach Anspruch 1, dadurch gekennzeichnet, daß die Erhöhung (7) kegelstumpfförmig, die Vertiefung (8) dazu korrespondierend, jedoch mit etwas kleinerem Bodendurchmesser als dem Kopfdurchmesser der Erhöhung entspricht, ausgebildet ist.

3. Verbindung nach Anspruch 1 oder 2, dadurch gekennzeichnet, daß die Schraubenlöcher (10, 11) durch das Zentrum der jeweiligen Stützzone (3) gebohrt sind.

4. Verbindung nach den Ansprüchen 2 mit 3,
dadurch gekennzeichnet,
daß der mittlere Durchmesser der Erhöhung (7) etwa das dreifache des Durchmessers des im Zentrum der Erhöhung (7) gebohrten Schraubenloches (10) beträgt.

5. Verbindung nach Anspruch 1 oder 2,
dadurch gekennzeichnet,
daß bei außerhalb der Stützzonen (3) gebohrten Schraubenlöchern (10a, 11a; 12) deren Achsabstand von den Stützzonen (3) zwischen dem zweifachen und dem vierfachen Durchmesser der Schraubenlöcher beträgt.

6. Verbindung nach Anspruch 1,
dadurch gekennzeichnet,
daß die Stützzonen (3) jeweils paarweise über die Anschlußseiten verteilt angeordnet sind und daß zwischen jedem Paar eine Verbindungsschraube (4) vorgesehen ist.

7. Verbindung nach einem der Ansprüche 1 bis 6,
wobei die Anschlußteile Flansche einer Flanschverbindung, insbesondere an umlaufenden Wellen sind,
dadurch gekennzeichnet,
daß die Flansche (2, 6) nach dem Genauschmiedeverfahren durch Warmumformen und nachfolgendes Kaltkalibrieren mit einbaufertigen Anschlußseiten hergestellt sind.

8. Verbindung nach Anspruch 7,
   dadurch gekennzeichnet,
   daß die Vertiefungen (8) zusätzlich noch spanend
   nachbearbeitet werden.

9. Verbindung nach einem der Ansprüche 1 bis 6,
   zwischen einer Welle (16) und einer sie ummantelnden Nabe (13),
   dadurch gekennzeichnet,
   daß ein Anschlußteil durch die Stirnseiten von Welle (16) und Nabe (13), das andere Anschlußteil durch
   eine Kopfplatte (14) gebildet ist, wobei die Kopfplatte (14) mehrere konische Erhöhungen (7) aufweist, und die entsprechend konischen Vertiefungen (8) jeweils etwa hälftig in Welle (16) und Nabe (13) eingebracht sind, und daß die Kopfplatte
   (14) in ihrem Zentrum mittels einer Spannschraube
   (15) an der Welle befestigt ist.

10. Verbindung nach Anspruch 9,
    dadurch gekennzeichnet,
    daß die Kopfplatte (14) nach dem Genauschmiedeverfahren durch Warmumformen und nachfolgendes Kalt-
    kalibrieren mit einbaufertiger Anschlußseite her-
    gestellt ist.

0062109

Fig.1

Fig.2

Fig.3

Fig.5

Fig.4

Fig.6

Fig. 7

Fig. 8

Europäisches
Patentamt

EUROPÄISCHER RECHERCHENBERICHT

0062109
Nummer der Anmeldung

EP 81 10 9476

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-B-1 221 499 (PETER) <br> * Spalte 4; Figuren 5,6 * | 1-3 | F 16 D 1/06 <br> F 16 D 1/02 |
| Y | | 6,8,9 | |
| | --- | | |
| X | DE-A-2 831 006 (BBC AG.) <br> * das ganze Dokument * | 1-3 | |
| | --- | | |
| X | US-A-3 666 304 (WILDER) <br> * das ganze Dokument * | 1-4 | |
| | --- | | |
| X | GB-A-1 003 376 (RHEINMETALL) <br> * das ganze Dokument * | 1-3,7 | |
| | --- | | |
| Y | GB-A- 274 214 (WALTERS) <br> * Seite 2, Figuren 1-6 * | 6 | RECHERCHIERTE SACHGEBIETE (Int. Cl. 3) |
| | --- | | |
| Y | DE-A-2 119 325 (WGW) <br> * das ganze Dokument * | 9 | F 16 D 1/00 <br> F 16 L <br> F 16 B |
| | --- | | |
| Y | US-A-3 828 515 (GALGOCZY) <br> * das ganze Dokument * | 8 | |
| | --- | | |
| A | DE-A-2 335 097 (ROLLS ROYCE) | | |
| | --- | | |
| A | DE-B-2 715 639 <br> (GELENKWELLENBAU) | | |
| | --- | | |

Der vorliegende Recherchenbericht wurde für alle Patentansprüche erstellt.

| Recherchenort <br> DEN HAAG | Abschlußdatum der Recherche <br> 08-07-1982 | Prüfer <br> BALDWIN D.R. |
|---|---|---|

Europäisches
Patentamt

**EUROPÄISCHER RECHERCHENBERICHT**

0062109

Nummer der Anmeldung

EP 81 10 9476

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-1 445 691 (ROLLS ROYCE) | | |
| | --- | | |
| A | DE-C-2 537 146 (BALD) | | |
| | --- | | |
| A,D | DE-C- 539 039 (GOTTSCHACK) | | |
| | ----- | | |

RECHERCHIERTE
SACHGEBIETE (Int. Cl. 3)

Der vorliegende Recherchenbericht wurde für alle Patentansprüche erstellt.

| Rechercheort DEN HAAG | Abschlußdatum der Recherche 08-07-1982 | Prüfer BALDWIN D.R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82